# EUROPEAN PATENT SPECIFICATION

(11) **EP 1 035 527 B1**
(45) Date of publication and mention of the grant of the patent: **27.02.2008**
(21) Application number: 00104514.5
(22) Date of filing: 10.03.2000
(51) Int. Cl.: G07G 1/12, G07G 1/00, G07G 5/00

(54) **Pos system with capability for entering and printing advertisements**
Registrierkassensystem mit einer Fähigkeit zur Eingabe und zum Ausdrucken von Werbetexten
Système de terminaux de vente avec capacité d'entrée et d'impression d'annonces publicitaires

(30) Priority: 10.03.1999 JP 6353299; 03.03.2000 JP 2000059227
(43) Date of publication of application: 13.09.2000
(73) Proprietor: Seiko Epson Corporation, Shinjuku-ku Tokyo 163-0811 (JP)
(72) Inventor: Yanagisawa, Noboru, Suwa-shi, Nagano-ken 392-8502 (JP); Minowa, Masahiro, Suwa-shi, Nagano-ken 392-8502 (JP); Oguchi, Teruaki, Suwa-shi, Nagano-ken 392-8502 (JP); Oguchi, Asahiro, Suwa-shi, Nagano-ken 392-8502 (JP)
(74) Representative: Hoffmann, Eckart

(56) References cited:
- WO-A-91/06913
- US-A- 5 819 241
- PATENT ABSTRACTS OF JAPAN vol. 1998, no. 09, 31 July 1998 (1998-07-31) & JP 10 091868 A (NEC CORP), 10 April 1998 (1998-04-10)
- PATENT ABSTRACTS OF JAPAN vol. 1999, no. 13, 30 November 1999 (1999-11-30) & JP 11 232552 A (TOSHIBA TEC CORP), 27 August 1999 (1999-08-27)
- PATENT ABSTRACTS OF JAPAN vol. 1999, no. 13, 30 November 1999 (1999-11-30) & JP 11 219481 A (NRI &NCC CO LTD), 10 August 1999 (1999-08-10)
- PATENT ABSTRACTS OF JAPAN vol. 1997, no. 07, 31 July 1997 (1997-07-31) & JP 09 081863 A (FUJITSU LTD), 28 March 1997 (1997-03-28)
- PATENT ABSTRACTS OF JAPAN vol. 1997, no. 10, 31 October 1997 (1997-10-31) & JP 09 147235 A (KOFU NIPPON DENKI KK), 6 June 1997 (1997-06-06)
- PATENT ABSTRACTS OF JAPAN vol. 1995, no. 10, 30 November 1995 (1995-11-30) & JP 07 177494 A (HITACHI DENSHI LTD), 14 July 1995 (1995-07-14)
- "New Idea for Convenience Stores - News and Gamble Information on Receipts - D. Ishikawa Management and Accounting Office files a patent application" NIKKAN KOGYO SHIMBUN NEWSPAPER, 26 January 1999 (1999-01-26), page 39 XP002168960 Tokyo

## Description

The present invention relates to a POS (Point-Of-Sale) system and a method of controlling it. More particularly, the invention relates to a system and a control method that add an advertisement publication function to existing POS systems.

POS systems wherein customer check-out information is printed as a receipt are widely used in convenience stores, supermarkets, and the like. With such POS systems, the operator uses a barcode reader, such as a hand scanner, to read the barcode on a product label attached to the product. The price of the product which has been stored separately in a storage device is obtained based on the product identification information (referred to as "product ID" hereinafter) contained in the read barcode, and check-out calculations are performed. Finally, the check-out calculation information is printed as a receipt. In addition to the check-out information such as the product ID, the number of units of a particular product etc., the operator, in some cases, also inputs personal information about the customer such as age (or age group), sex, occupation, etc.. Such customer related information is used to understand trends, and is, thus, helpful in planning for laying in stock.

It is also known to use the customer receipts issued by such POS systems to convey additional information, in particular commercial advertisements, to the customers. Examples of such prior art can be found in the documents JP-A-10198864, JP-A-10091868, JP-A-5182077, JP-A-08235441, JP-A-09081863 and JP-A-081161636. JP-A-10198864, for instance, discloses a POS system having a receipt printing unit for printing check-out information on customer receipts, and an advertisement output unit connected to the receipt printing unit. In the advertisement output unit are stored commercial advertisements that are alternately output to the receipt printing unit to be printed as additional information together with check-out information on the customer receipts. A timer is used to switch from one advertisement to the next one. A similar POS system is disclosed in JP-A-10091868 and differs from the aforementioned system by selecting one of a plurality of prestored commercial advertisements in accordance with information related to an article or the customer that has been entered at an input device. JP-A-5182077 discloses a POS system in which particular information for certain groups of customers is printed on the customer receipts in response to information identifying which group a respective customer belongs to. JP-A-081161636 discloses a POS system which, in addition to the normal POS devices, has an image scanner connected to it. An image read by the image scanner is processed by a CPU controlling the system and printed as a background image on the receipts.

JP-A-08279079 discloses a POS system comprising a POS unit and a store management device connected to it. Each customer is given a personal identification number and transaction data on each purchase by a particular customer are stored in a storage device of the store management device. Upon request by the customer the stored information can be printed to provide something like a household account book for the customer.

In addition to selling goods, convenience stores and the like also perform services such as reserving or ordering tickets such as concert tickets, compact disks, and other such products. For this purpose, information input terminals to be operated by customers that want to input information are also in widespread use. These terminal have a liquid-crystal display panel equipped with a touch panel as input device. The customer selects a desired product or ticket at the information input terminal, and receives a stub printed by the information input terminal. A barcode is printed on this stub, and the check-out process of the selected product(s) and/or ticket(s) is performed by reading this barcode with the POS system.

Also, as reported in Page 39 of the January 26, 1999 issue of the Nikkan Kogyo Shimbun newspaper, a POS system has been proposed wherein information available from the Internet or various other commercial information-providing services can be printed on the receipt according to the preferences of the customer. The information may be provided free of charge, or the customer who is provided with the information has to pay for the information. Another POS system has been proposed wherein a similar kind of information is displayed on a line display (customer display) attached to a cash register.

In the case of using such a POS system for commercial advertising, complicated procedures have to be followed to make registration with the internet or the other information-providing services for placing ads. Accordingly, conventional POS systems cannot appropriately deal with cases like for instance the case that local residents are to be enabled to place advertisements in a certain local area. The information printed on the receipt so far is fairly general such as weather forecasts or the news of the day.

There is a great demand for local residents to be able to actively participate in currently-operating systems and propagate announcements/advertisements regarding various events being held by the local residents. Local information systems that could be employed for this purpose are disclosed in JP-A-07085164 and JP-A-07177494. These systems require extra equipment and are inconvenient.

Since convenience stores and the like are facilities which are frequented by local residents, they are an optimum place for information exchange. Furthermore, if local residents provided the convenience store management with information on forthcoming events, such as field days, bazaars, etc., this would aid the stores in planning for laying in stock. Unfortunately, for the reasons explained above, POS systems can currently not serve as a channel for active exchange of information between local residents.

Further, a system would be desirable that allows the amount of billing to be changed according to the type of announcement, such that school events with a high public nature could be placed free, for instance, and profit-oriented advertisements would have to be paid for.

It is an object of the present invention to provide a POS system, wherein a customer who desires to place an advertisement can enter his advertisement and is billed according to the information of the advertisement, and wherein, if the customer pays the required advertising fee, the advertisement is printed on the receipts of other customers.

This object is achieved with a POS system as claimed in the appended claims.

The present invention provides an easy way of allowing local information exchange at low costs by partly using the POS equipment already installed at places that are frequently visited by many people. Commercial as well as private announcements/advertisements can thus be easily distributed in locally restricted areas with only little change to existing equipment.

Programs for realizing the POS system and method according to the present invention may be stored on machine-readable storage media such as compact disks, floppy disks, hard disks, optical-magnetic disks, digital video disks, magnetic tape, semiconductor memory, and so forth. Further, arrangements may be made wherein programs for controlling a POS system according to the present invention are provided in a WWW (World Wide Web) server computer, from which they can be downloaded as appropriate into the POS system such as to update existing programs in the POS system, thereby allowing the POS system to execute the programs. In this case the server computer and the Internet/Intranet linking the server computer and the POS system may be regarded as storage medium.

Other objects and attainments together with a fuller understanding of the invention will become apparent and appreciated by referring to the following description of preferred embodiments taken in conjunction with the accompanying drawings, in which:
- Fig. 1: illustrates an overview of an embodiment of a POS system according to the present invention;
- Fig. 2: is a block diagram of an information input terminal for the POS system shown in Fig. 1;
- Fig. 3: is a block diagram of a server for the POS system shown in Fig. 1;
- Fig. 4: is a block diagram of a cash register for the POS system shown in Fig. 1;
- Fig. 5: is a functional block diagram of a POS system according to the present invention;
- Fig. 6: is a flowchart of a process for temporary registration of an advertisement which is executed at the information input terminal of Fig.2;
- Fig. 7: is an example of a main menu;
- Fig. 8: is an example of a type sub-menu;
- Fig. 9: is an example of an input mask for entering an expiration date;
- Fig. 10: is an example of a target group sub-menu;
- Fig. 11: is an example of an input mask for entering an advertisement;
- Fig. 12: is an example of a confirmation menu;
- Fig. 13: is an example of a registration confirmation menu;
- Fig. 14: is a flowchart of a billing process executed by the cash register and the server of the POS system shown in Fig. 1;
- Fig. 15: is a flowchart the check-out process executed by the cash register and the server of the POS system shown in Fig. 1; and
- Fig. 16: is an example of a receipt output by the POS system shown in Fig. 1.

It should be noted that though the embodiment shown in the drawings and described below is an arrangement designed for use in Japan use of the invention is of course not restricted to Japan.

### Overall Configuration of the POS System

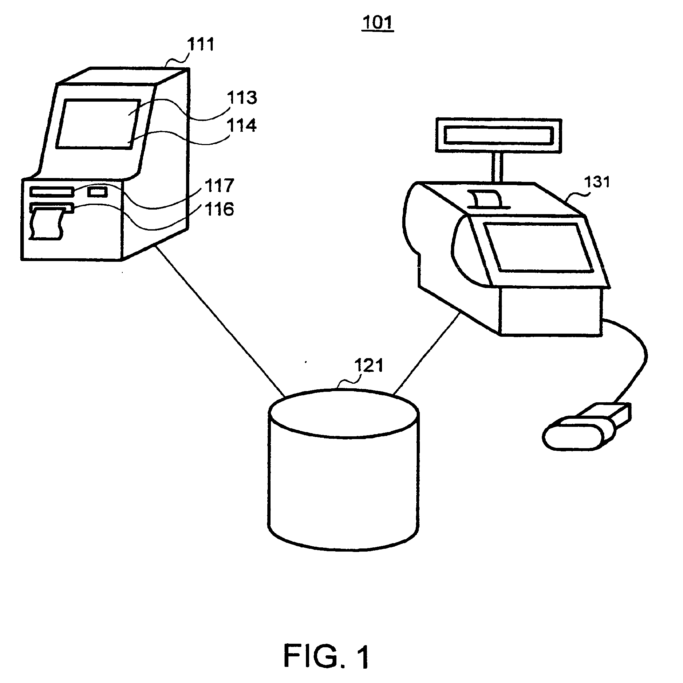

Fig. 1 shows a block diagram of an embodiment of a POS system according to the present invention.

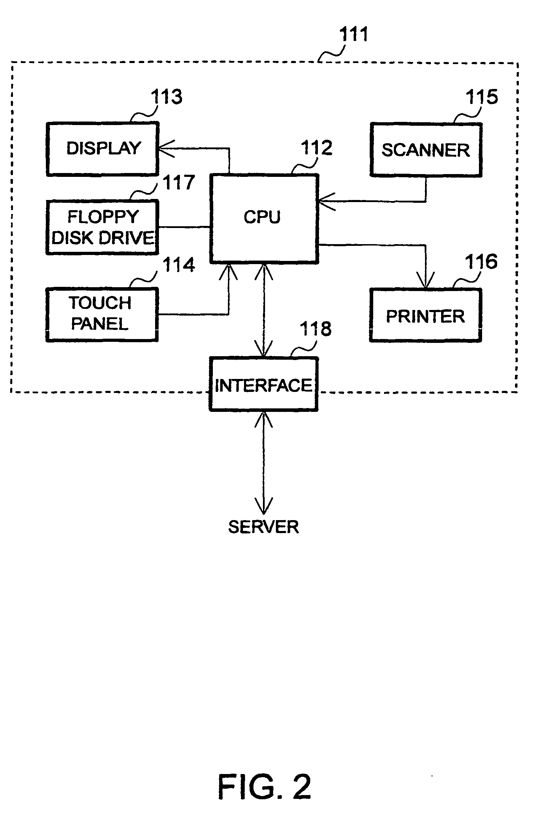

The POS system 101 comprises a terminal 111 for information input, a server 121, and a cash register 131. The cash register 131 comprises a keyboard and barcode reader as input devices, a liquid crystal display and a customer display 136 as display devices, and a receipt printer 139 or the like as a printing device. The terminal 111 comprises a liquid crystal display 113 as a display device, a touch panel 114, a floppy disk drive 117 and preferably an image scanner 115 (see Fig. 2) as input devices, and a printer 116 as a printing device. The printer 116 is preferably a multi-color printer, e.g., an ink-jet printer.

A customer (referred to as the "advertiser" hereinafter) who provides information that he/she desires to be placed on the receipts of other customers (referred to as the "customers" hereinafter) inputs the information at the terminal 111. While the information that an "advertiser" enters at the terminal 111 in this manner will be referred to as "advertisement" below this is not intended to impose any restriction whatsoever on the kind of information. Hence, in the context of the present invention the term "advertisement" includes all kinds of information that customers may wish to be printed on other customers' receipts and irrespective of whether or not a fee is to be paid for the printing and whether or not an advertisement is commercial or private. When entering his advertisement the advertiser may at the same time specify a certain target group of customers to be addressed by the advertisement by entering certain conditions such as the sex, the age group, the occupation, etc., to be met by a customer. If such conditions are entered, only customers (also referred to herein as the "target customers") that belong to the specified target group will have the advertisement placed on their receipts.

The server 121 stores advertisements input at the terminal 111 together with the conditions specifying respective target groups, if any. Preferably, the server also stores a product database including various information about the individual products sold in the store. Such database can be used for retrieving products prices, for keeping track of stock etc..

The information required for the check-out of a customer is input at the cash register 131. The operator reads the barcodes attached to the products with the barcode reader 131 b and inputs the number of products with the keyboard or the like. The operator also inputs the age group, sex, occupation, etc., of the customer. Check-out calculations are performed based on the thus input information. These check-out calculations may be performed at the cash register 131 or at the server 121. The product database in the server 121 can be used to check the price of products based on their product IDs read with the barcode reader 133.

### Configuration of Terminal 111

Fig. 2 shows a block diagram of an embodiment of terminal 111 for use in the POS system shown in Fig. 1.

The components of the terminal 111 are controlled by a CPU 112. Information input buttons, a keyboard or similar means for character input, etc., are displayed on the liquid crystal display 113. The desired items can be selected by pressing the touch panel 114 provided on the liquid crystal display 113 at the position of the displayed buttons and/or keyboard keys. This allows advertisements to be input. A handwriting recognition area may also be provided on the touch panel and a character recognition program installed in the terminal 111 to recognize the handwriting, whereby hiragana, katakana, kanji or alphabetic characters can be directly input.

The arrangement may be such that the conditions defining a certain target group of customers, the type of advertisement (field day, bazaar, recital, etc.), and the expiration date of the advertisement (the date of the event, etc.), can be input beforehand by the buttons provided and displayed here. Thus, ease of input is facilitated for the advertiser, and this information can also be used for the convenience store to lay in stock.

Preferably, the terminal 111 is also provided with the image scanner 115. The advertiser can prepare a drawing or the like to be printed as the or part of the advertisement beforehand, and have it read in with the scanner 115. Furthermore, the terminal 111 is provided with the floppy disk drive 117, and configured such that the advertiser can read in image files (such as JPEG, GIF, and TIFF files) created at home as image data. The printer 116 is provided to allow the advertisement that has been entered into the terminal 111 to be printed out for confirmation.

In addition to enabling input of advertisements, the terminal 111 can be used for making reservations and placing orders for products such as concert tickets, compact disks, and so forth. A customer using this service follows the instructions on the display 113, and operates the touch panel 114, thereby selecting the desired product. Once the selection is completed, the printer 116 prints a stub. The customer takes the stub, which the printer 116 has printed, to the cash register 131, and the operator scans the barcode printed on the stub, whereby the selected product can be paid for.

All communication between the terminal 111 and the server 121 is made via an interface 118 in terminal 111. Thus, advertisements input at terminal 111 and information about products selected at terminal 111 (referred to as "order information" hereinafter) are sent to the server 121 via this interface 118.

### Configuration of Server 121

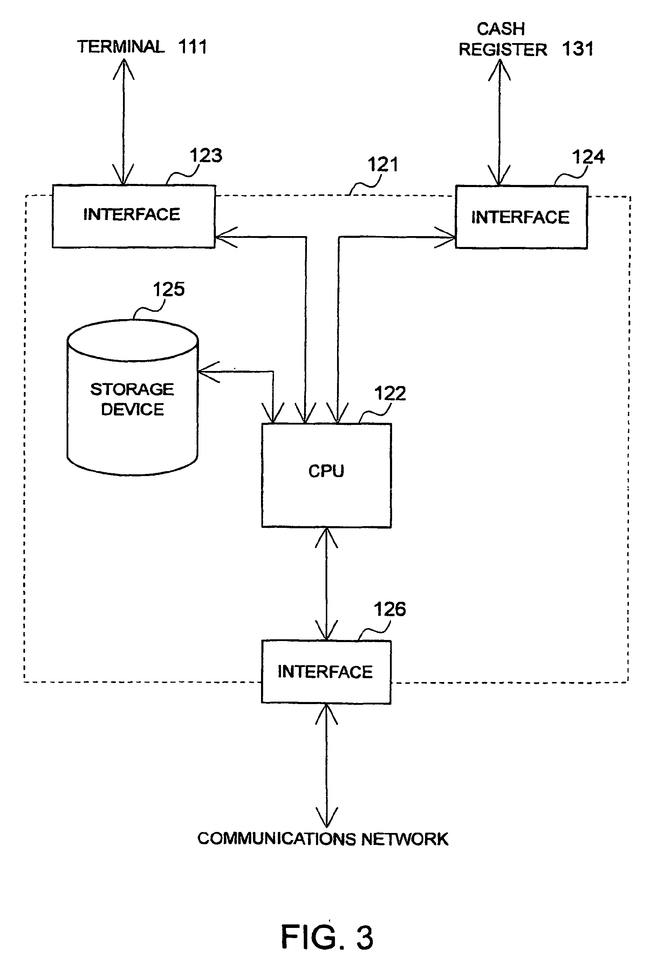

Fig. 3 illustrates a block diagram of an embodiment of the server 121 for use in the POS system shown in Fig. 1.

The components of the server 121 are controlled by a CPU 122. The server 121 communicates with the terminal 111 via a first interface 123, and communicates with the cash register 131 via a second interface 124.

The server 121 receives the advertisement and the order information from terminal 111, and stores this information in a non-volatile storage device 125 such as a hard disk, DVD, or MT (Magnetic Tape).

As mentioned before, in the present embodiment the storage device 125 also stores a product database. Using this database the CPU 122, upon receiving product IDs from the cash register 131, returns the price of the products to the cash register 131.

The server 121 can connect to a computer communication network using telephone lines or the like via a network interface 126. By this means information can be exchanged with a headquarter, e.g., the state of sales of products can be reported to the headquarter, and plans for laying in stock and updating information regarding changes in product prices can be received from the headquarter. The headquarter can also send advertisements other than those to be input by advertisers at the terminal 111.

Also, the advertisements that have been input can be checked, and information regarding the types and dates of various events to be held locally can sent to the headquarter allowing the headquarter to change the plans for delivering products to the store to something more appropriate.

### Configuration of Cash Register 131

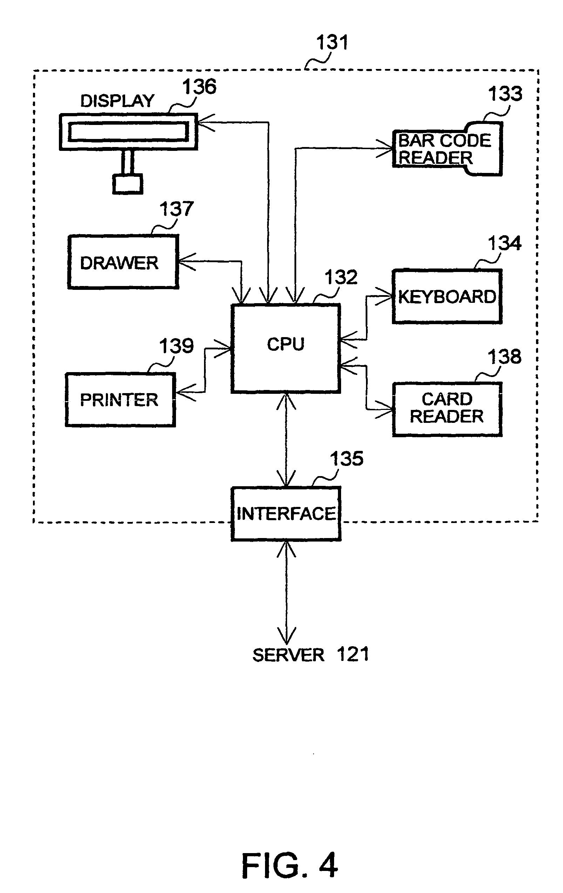

Fig. 4 is a block diagram of an embodiment of the cash register 131 for use in the POS system shown in Fig. 1.

The components of the cash register 131 are controlled by a CPU 132. The operator uses the barcode reader 133, which is a hand scanner or the like, to read barcodes attached to products, and/or the keyboard 134 to input product IDs. Also, the operator inputs personal information about the customer who is currently checking out, such as the customer's age group, the customer's sex, the customer's occupation, etc., using the keyboard 134.

The price of the product is found by means of the product ID from the product database stored in the server 121 as mentioned before. The cash register 131 communicates with the server 121 via an interface 135.

The cash register 131 displays the name of the product whose barcode has been read by the barcode reader, its price, the sum rung up, etc., on the customer display 136. This allows the customer to confirm this information. In addition, the cash register 131 can also be provided with a cash drawer 137 and/or a card reading device 138 for reading credit cards or prepaid cards. The check-out information such as the product name, price, number, sum, and change are printed as a receipt by the printer 139. The printer 139 is preferably a high-speed ink-jet printer capable of multi-color printing.

The personal information about the customer is sent to the server 121. The CPU 122 of the server 121 (cf. Fig.2) compares this personal information with the target group conditions stored in the storage device 125. In other words, the CPU 122 checks whether there is any advertisement for which a target group has been specified to which the customer that is currently checking out belongs. If an advertisement is found, it is transmitted to the cash register 131. If the condition is fulfilled for multiple advertisements, one of them is selected. The selection may be made according to random numbers, the frequency of use, or based on other criteria. No particular criterion for this selection is critical to the practice of the present invention.

The cash register 131 combines the received advertisement with the check-out information, and prints this combination on one receipt.

### Temporary Registration of Advertisements

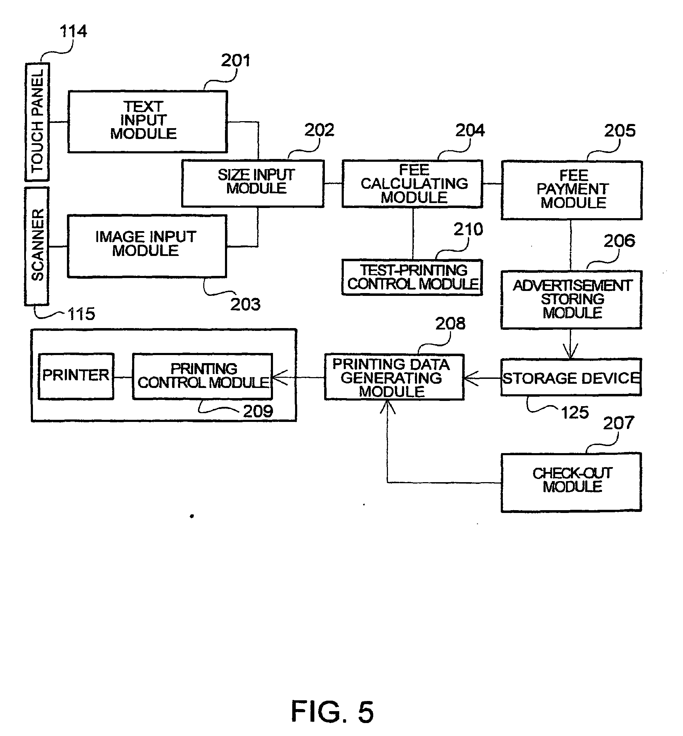

Fig. 5 is a functional block diagram of the POS system according to the present invention.

An text input module 201 receives text data from the touch panel 114, and stores the text data in a predetermined memory within the terminal 111. A size input module 202 is connected to the text input module 202 for specifying the size of the printout of the advertisement. An image input module 203 is connected to the scanner 115 (and/or the disk drive 117) to receive image data, and also to the size input module 202. The whole advertisement is temporarily saved in a storage device within the terminal 111, e.g., as a file in HTML format. The size input module 202 and the image input module 203 can be combined with text input module 201 to an information input module which would then control the advertising information and additional information.

A fee calculating module 204 calculates an advertising fee charged for the printing of the advertisement, based on the selected size of the printout, and/or other information such as the advertising period, the size or kind of the target group, and so forth. A registration number and the amount due are printed on a ticket-like sheet by the printer 116, either as text or converted into a barcode pattern, thus creating a registration card. A button for specifying test printing may be displayed on the touch panel 114, and pressing it activates a test printing module 210. Such test printing allows the advertiser to confirm whether or not the form in which his advertisement is going to be printed on customer receipts is the desired one.

With the input information processed by modules 201-204 and 210, the information input task is completed, and the advertisement and the conditions defining a target group are temporarily registered in the storage device within the server 121.

The advertiser who wishes to run this advertisement takes the registration card to the cash register, where the information on the registration card is read in (with the bar-code reader for instance) and the advertising fee is paid. That is, in this function the cash register serves as a fee payment module 205. The advertisement storing module 206 connected to the module 205 receives the payment confirmation, and formally registers the file of the advertisement which has only been temporarily saved so far, in the storage device 125.

When a normal customer purchases products and is to make payment at the cash register, the sum of the products is calculated by a check-out module 207 and displayed on the display 136. Once payment is made by the customer, a printing data generating module 208 of the server 121 combines the specified advertisement file with the check-out information data according to a predetermined format, thus generating printing data. As part of this procedure the module 208 checks whether the customer belongs to any target group of advertisements stored in the server. If so, the file of the advertisement found (or the selected advertisement if more than one are found) is read out from the storage device 125, and the printing data is generated.

The printing data is transmitted to the cash register 131 as data for printing the receipt, and is printed and output from the printing device 139 controlled by a printing control module 209.

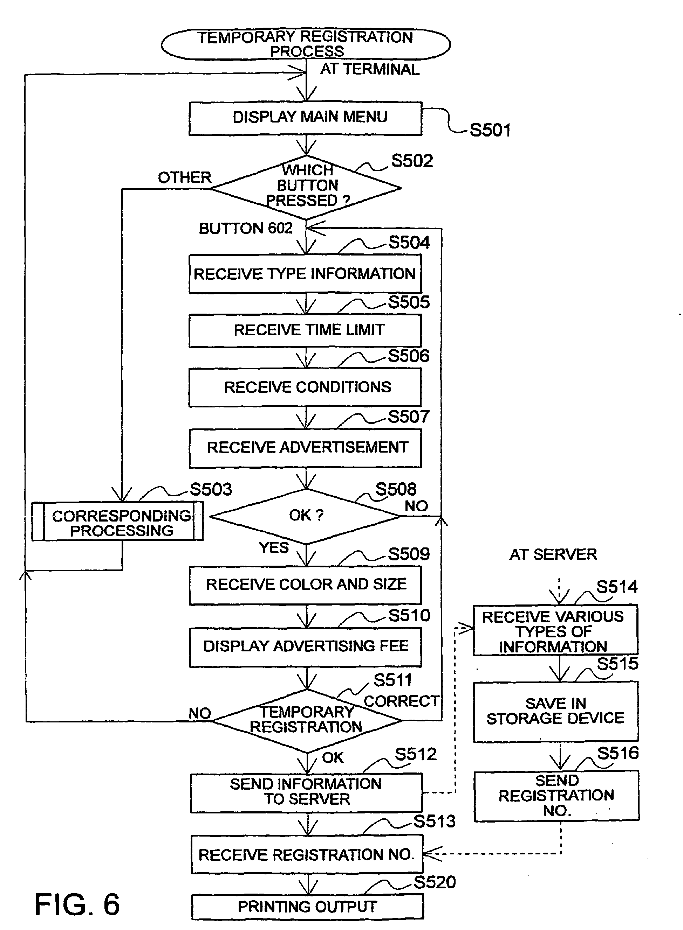

Fig. 6 is a flowchart of the process to the point where the advertisement is temporarily saved in the storage device of the POS system shown in Fig. 1.

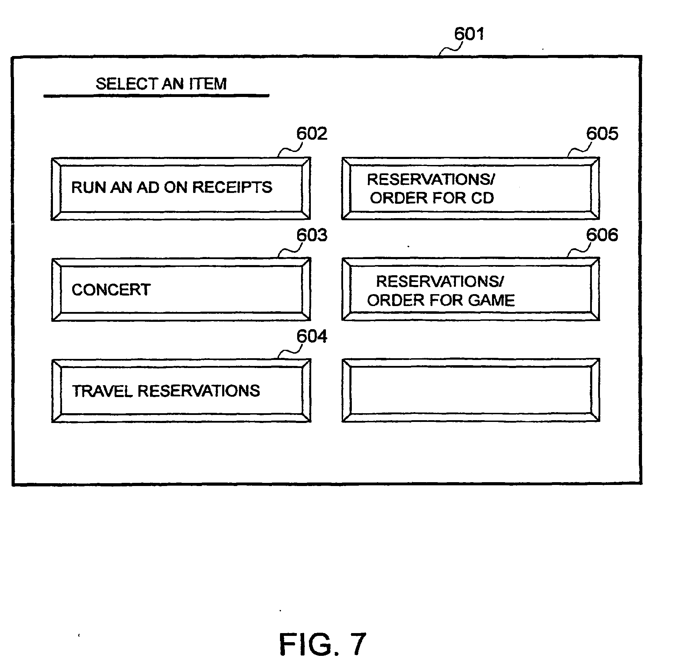

First, the CPU 112 of the terminal 111 displays a main menu on the display 113 (step S501). Fig. 7 shows an example of such main menu. Displayed on this exemplary main menu 601 are selection buttons 602 to 606. The button 602 is selected when an advertisement is to be printed on customer receipts. The button 603 is selected when concert tickets are to be reserved or issued. The button 604 is selected when a travel ticket is to be reserved/issued or a hotel reserved. The button 605 is selected when a music CD is to be reserved or ordered. The button 606 is selected when a game software is to be reserved or issued.

The CPU 112 monitors the touch panel 113 and checks which of the buttons has been selected, i.e., at the location of which button the touch panel has been pressed (step S502).

When a button other than the button 602 has been selected (step S502 returns "other"), a corresponding process is executed (step S503), and the flow returns to step S501. Step S503 can be carried out using known techniques, so a detailed description is omitted here.

When the button 602 has been selected (step S502 returns "advertisement"), the CPU 112 displays a type sub-menu on the display 113, and waits for the type of advertisement to be selected from the sub-menu (step S504).

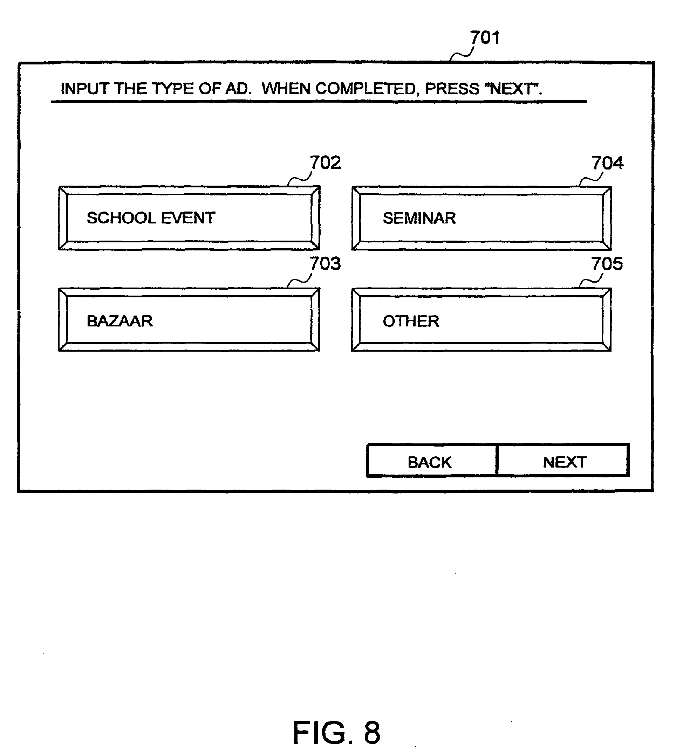

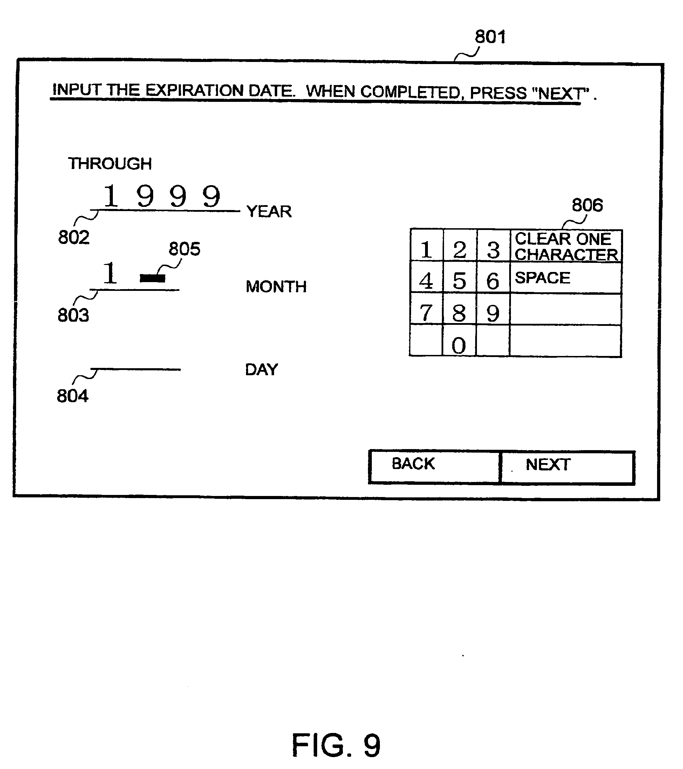

Fig. 8 illustrates an example of the type sub-menu. The type sub-menu 701 displays a "School Event" button 702, a "Bazaar" button 703, a "Seminar" button 704, and an "Other" button 705. When the purpose of the advertisement is to notify customers of a cultural festival or field day, the button 702 is selected. When the purpose is to notify the customers of a bazaar or flea market, the button 703 is selected. When the purpose is to notify the customers of an ikebana (flower arrangement) class, language class, private tutor, etc., the button 704 is selected. If none of these types of advertisement applies, the button 705 is selected. A "BACK" button and a "NEXT" button shown in Fig. 8 as well as in Figs. 9 to 12 allow navigating back and forth through the sub-menus/inputs masks.

Next, the CPU 112 displays on the display 113 an input mask that allows inputting an expiration date for the advertisement (step S505). Fig. 9 shows an example of this input mask. The advertiser can input the date at which an event or the like takes place. The input mask 801 shows a cursor 805 that indicates the position at which input is currently being made, and a numerical keypad 806 for inputting digits. A year field 802, a month field 803, and a day field 804 are provided where the year, month, and day, respectively, entered by means of the keypad are displayed.

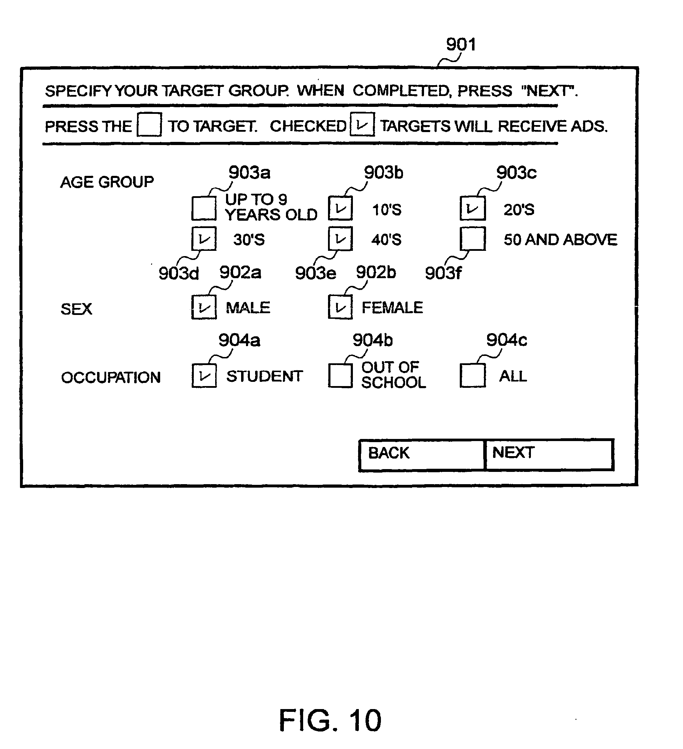

Then the CPU 112 displays on the display 113 a target group sub-menu that allows entering conditions for specifying a target group of customers (step S506). Fig. 10 illustrates an example of this sub-menu. The sub-menu 901 displays selection buttons 902a, 902b for the sex, selection buttons 903a, 903b, 903c, 903d, 903e and 903f for the age group, and selection buttons 904a, 904b, and 904c for the occupation. As will be understood, multiple selections are possible for the sex and the age group. The advertiser can input the desired conditions by selecting the corresponding buttons.

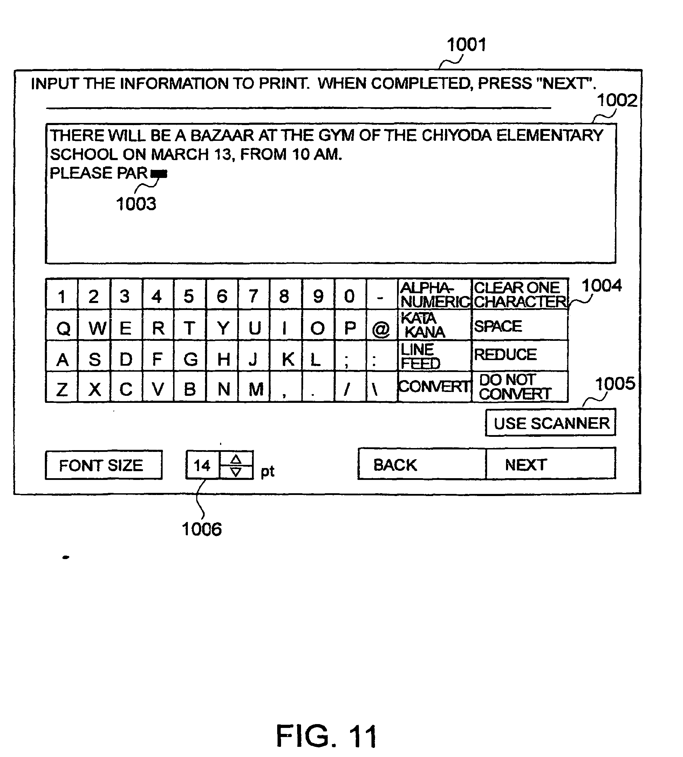

Next, the CPU 112 displays on the display 113 an input mask that allows the text and or graphics for the advertisement to be entered (step S507). Fig. 11 illustrates an example of this input mask. The input mask 1001 displays an input field 1002 for displaying what has been input so far, a cursor 1003 for indicating the position at which input is currently being made, and a keyboard 1004 for input of any text. Further, a scanner button 1005 for reading images with the scanner 115 and using these as advertisement is displayed. The advertiser can easily input the information to be provided, by operating the keyboard 1004 and/or the scanner button 1005.

Desired font sizes can be specified with a "Font Size" button 1006. Further, though not shown in the drawings, configurations may be made such that the font type, and the font style, such as bold or italic, can be specified for part or all of the information.

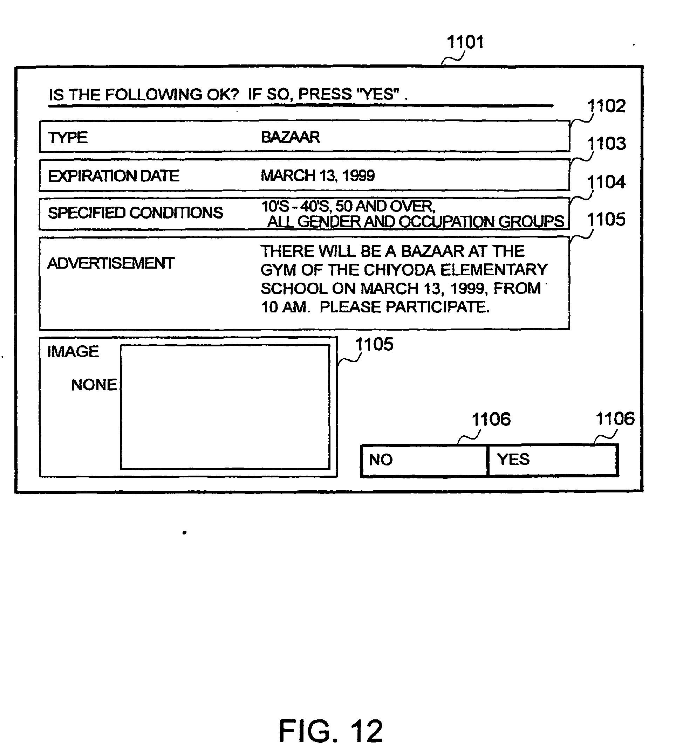

Following the target group sub-menu, the CPU 112 displays on the display 113 a confirmation menu that allows to either confirm or not confirm the information that was input in steps S504 through S507 (step S508). Fig. 12 shows an example of the confirmation menu. The confirmation menu 1101 displays the type of advertisement in field 1102, the expiration date in field 1103, target group conditions in field 1104, the advertisement itself (text and/or graphics) in field 1105, and YES/NO buttons 1106 for confirmation or rejection.

When the information entered in steps S504 to S507 is not confirmed, i.e., the NO button in the confirmation menu 1101 is pressed (NO in step S508), the flow returns to step S504. When steps S504 to S507 are repeated in this way, the previously input information is displayed and can be simply corrected/altered or replaced.

It will be appreciated by those skilled in the art that the way of entering information that has been explained above with reference to Fig. 7 to 11 is only one example that may be changed in several aspects. No particular way of entering the required information is critical to practice the present invention, even though a menu guided input of the required information same or similar to the one explained above is preferable to make things as easy as possible for the advertiser.

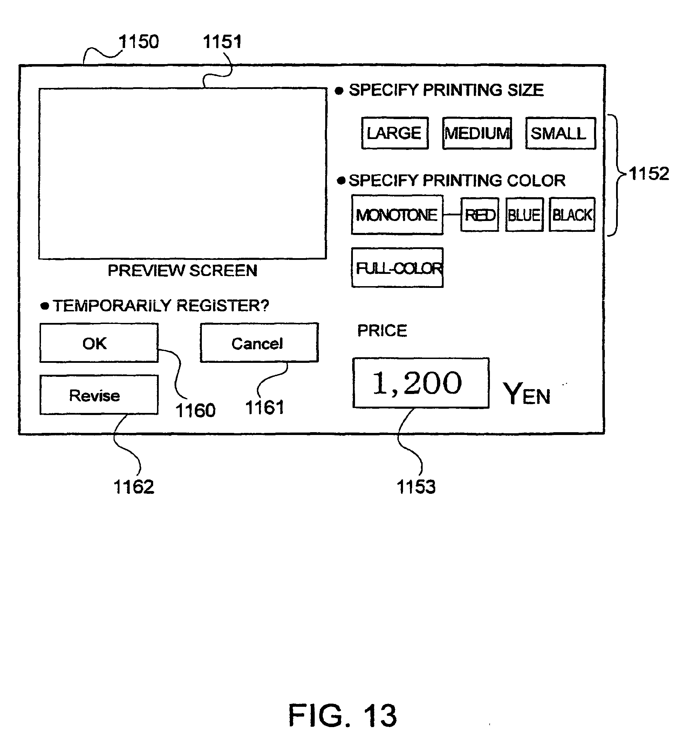

When the information entered in steps S504 to S507 is confirmed, i.e., the YES button in the confirmation menu 1101 is pressed (YES in step S508), the CPU 112 displays on the display 113 a temporary registration screen, and prompts the customer to confirm that the advertisement shown is to be registered. Fig. 13 illustrates an example of a registration menu 1150. In the registration menu, a preview screen 1151, buttons 1152 for specifying printing size and printing color, a display screen 1153 showing the amount of advertising fee, etc., are arranged along with a registration button 1160, a cancel button 1161, and a revise button 1162. The preview screen 1151 in Fig. 13 preferably displays the advertisement in the same way and the same size in which it will be printed on the receipts.

Using the above buttons, the size and color are specified (step S509), the advertising fee is calculated based on the entered information such as the advertising period, size, etc. (step S510), and is displayed and a query is made regarding whether the temporary registration is to be carried out (step S511). The advertising fee can be calculated, for instance, by multiplying the number of days from the current date to the expiration date by a certain monetary amount. Also, the advertising fee can be changed to predetermined amounts according to the type of the advertisement, such as 100 Yen for school events, 200 Yen for seminar notices, and so forth. Further, this may depend on the age of the advertiser (supposing that this age is entered at some place in addition to the information described above).

Pressing the OK button 1160 (YES in step S511) causes the advertisement itself together with the auxiliary information (such as the type of advertisement, the expiration date, and the target group conditions, the printing size and color and the amount of advertising fee) to be transmitted from the terminal 111 to the server 121 (step S509). Pressing the cancel button 1161, on the other hand, deletes all information (NO in step S511). If further corrections are necessary, the revise button 1162 is pressed. In this case, the flow returns to step S504.

The server 121 receives the advertisement and the related auxiliary information (step S514), correlates the advertisement and the auxiliary information, assigns a registration number and stores the information in the storage device 125 (step S515). The registration number is returned to the terminal 111 (step S516). The CPU 112 of terminal 111 receives the registration number (step S513), and has the printer 116 issue a bill that also serves as a registration card and has a barcode representing the registration number printed on it (step S520). Note that the barcode may additionally include the amount of advertising fee. The process then ends.

The advertiser may print-out the advertisement at the terminal 111 to confirm the particulars like size, color, font type, etc..

### Billing process

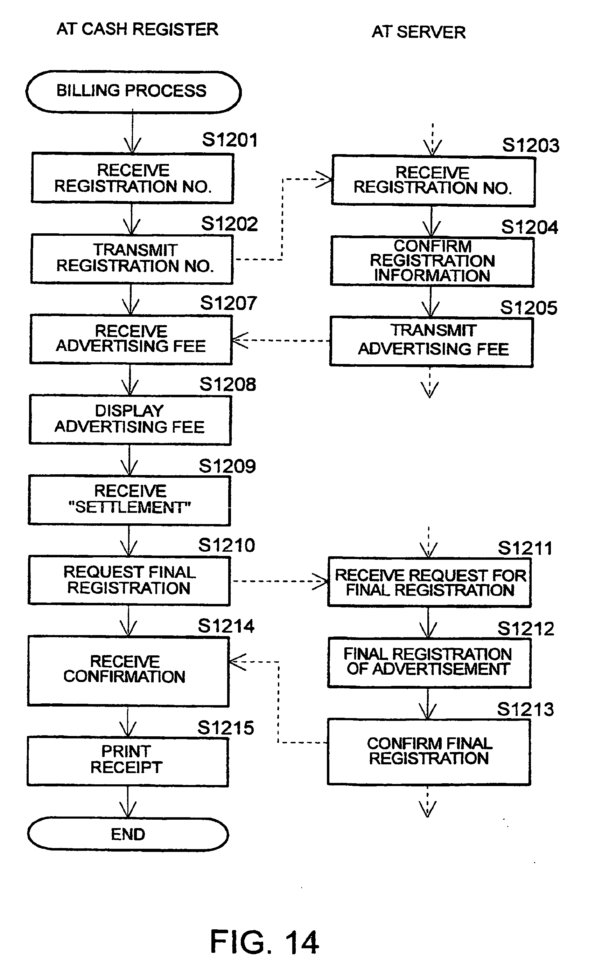

Fig. 14 is a flowchart illustrating the process that is performed to finally register the advertisement which has only been temporarily registered so far. The final registration requires that the cash register of the POS system shown in Fig. 1 confirms that the advertising fee for the advertisement has been paid. This process is initiated by the advertiser handing the registration card that was output in step S520 to the operator (employee) at the cash register 131.

First, the CPU 132 of the cash register 131 receives the registration number as read from the registration card by means of the barcode reader 133 (step S1201). The CPU 132 transmits this registration number to the server 121 (step S1202). The server 121, upon receiving the registration number (step S1203), looks for a matching temporary registration in the storage device 125 (step S1204) and, if it is found, transmits the amount of advertising fee calculated beforehand to the cash register 131 (step S1205). When the cash register 131 receives the amount to be charged (step S1207) it displays this amount on the display 136 (step S1208). As mentioned above, in an alternative embodiment the amount of advertising fee is included in the barcode on the registration card and is read at the cash register together with the registration number. In this case step S1205 is not required.

Now, the operator receives the displayed amount from the advertiser and enters information that allows the cash register to detect the fact that the advertising fee has been paid; the operator presses a "settle" button on the keyboard 134, for example, whereby the cash register 131 is notified the displayed amount has been settled (step S1209). The payment may be made by cash, or by credit card or prepaid card using a card reading device 138. Once the payment of the advertising fee for the advertisement is confirmed, the CPU 132 requests the server to make the final registration of the advertisement (step S1210).

The server receives this request (step S1211), makes final registration of the advertisement (step S1212), and returns a notice of the fact that the final registration has been made to the cash register 131 (step S1213). The cash register 131, upon receiving that notice (step S1214), prints a receipt for the advertiser indicating that the advertisement has been received (step S1215). Then the process ends.

### Check-Out Process

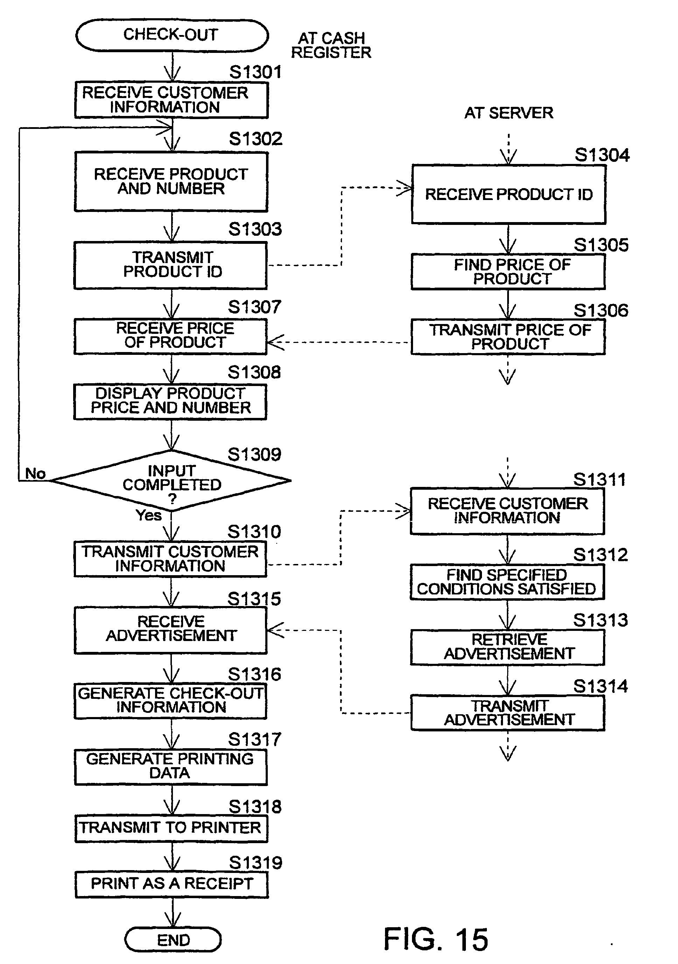

Fig. 15 is a flowchart illustrating the check-out process in the POS system shown in Fig. 1.

First, the CPU 132 of the cash register 131 receives the personal customer information as defined above that are entered by the operator at the cash register 131 by means of the keyboard 134 (step S1301). Next, product by product, the CPU 132 receives the product ID and the number of units of the respective product. This information is input by means of the barcode reader 133 and the keyboard 134 (step S1302). The product ID is sent to the server 121 (step S1303). Upon receiving the product ID (step S1304), the server 121 finds the price of that product from the product database stored in the storage device 125 (step S1305), and transmits this price to the cash register 131 (step S1306). The cash register 131 receives the price (step S1307), and displays it on the display 136 (step S1308).

Subsequently in step S1309 it is checked whether or not the input of product IDs is completed. The operator may for instance indicate that the input is completed by pressing a "total" button on the keyboard 134. If not all product IDs of the products chosen by the respective customer have been entered yet (NO in step S1309), the flow returns to step S1302. Otherwise (YES in step S1309), the CPU transmits the personal customer information received in step S1301 to the server 121 (step S1310).

Based on the personal customer information it receives in step S1311 the CPU 122 in the server 121 checks whether the respective customer is a target customer for any of the finally registered advertisements (step S1312).

Note that an advertisement of the convenience store itself and constantly-valid target group conditions corresponding thereto, may also be stored in the storage device 125 beforehand.

If the CPU 122 finds the customer to belong to a target group it retrieves the corresponding advertisement from the storage device 125 (step S1313) and transmits it to the cash register 131 (step S1314) and the cash register 131 receives the advertisement (step S1315). Next, the CPU 132 of the cash register 131 generates check-out information to be printed on a receipt, from the number of products received in step S1302, and the product price received in step S1307 (step S1316). Finally, the cash register 131 generates printing data by combining the advertisement (if one was received in step S1314) with the check-out information generated in step S1315 (step S1317) and transfers this to the printer (step S1318). The printer 139 then prints the receipt (step S1319), thus completing the process.

Regarding the printing format, the advertisement and the check-out information may be combined in such a way that the advertisement is set and printed in a predefined printing area, or the advertisement is printed first and the check-out information is printed subsequently. No particular format is critical to the practice of the present invention. Further, if multiple advertisements are registered, only the titles may be printed for customers who belong to none of the corresponding target groups.

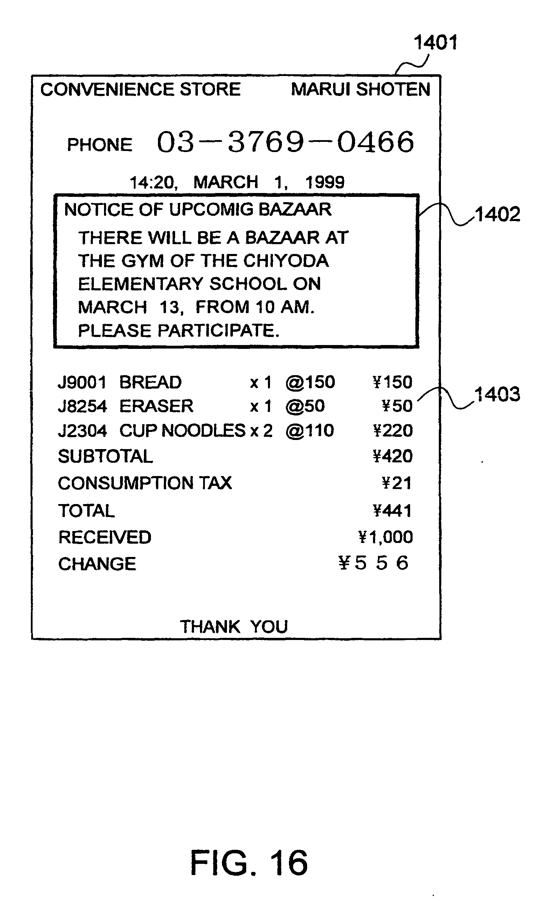

Fig. 16 illustrates an example of a receipt thus printed. The receipt 1401 is made up of an advertisement printing area 1402 and a check-out information printing area 1403, both being filled with information.

Incidentally, the above procedures illustrate one embodiment only, and this may be altered or the order of steps and/or processes may be changed. For example, though omitted in the above description, steps may be added as appropriate to this processing for calculating change, correcting input information, and so forth.

Also, the information input terminal 111 and the server 121, or the server 121 and the cash register 131 may be integrated to a respective single unit. Further, the processing performed at the server 121 may be performed at the cash register 131, or vice versa. Such embodiments are also encompassed in the scope of the present invention.

Also, with the above embodiment, the advertising fee for an advertisement is calculated based on its type and the number of days till the expiration date, but alternative methods may be conceived. For example, an arrangement may be made such that the advertiser can input at the terminal 111 on how many receipts the advertisement should be printed, in which case the advertising fee could be calculated by multiplying this number by a unit fee per receipt. This may be or not be in combination with specifying a target group. In any case, as soon as the advertisement has been printed on the preset number of receipts, it will be printed no further.

Further, an embodiment wherein the period for printing the advertisement can be set in further detail can be conceived. For example, specifications such as "between 10 AM to 2 PM, for two weeks starting today" might be possible. In this case, the number of customers foreseen differ by time range, so the advertising fee may be varied.

Also, although the above embodiment described the advertising fee as being prepaid, in the case of using a credit card or the like, an arrangement can be realized wherein billing is made later according to the number of receipts actually printed with advertisement. In this case, inputting the credit card number at the cash register causes the temporary registration to be made a final registration.

Also, instead of inkjet printer 116, a thermal printer, an impact dot printer or a laser printer can be used. If the printer 116 can not print colors, color buttons (cf. Fig. 13) are neglected.

## Claims

1. A POS system having
a cash register (131) comprising
- first input means (133, 134, 138) for entering data concerning one or more products selected for purchase by a first customer,
- first calculating means (132) responsive to said data for calculating the amount of money to be paid for said products by said first customer,
- first printing means (139), and
- first control means (132) for controlling said first printing means (139) to print a receipt for said first customer, said receipt including check-out information related to the purchase of said products, and
a terminal device (111) provided separate from said cash register (131) and comprising second input means (114, 115, 117) ,
**characterized in that**
said second input means (114, 115, 117) is arranged to allow a second customer to enter an advertisement to be printed by said POS system, and said POS system further comprises
second calculating means (112) for calculating an advertising fee to be paid for the printing of said advertisement,
payment detection means (132) for detecting payment of said advertising fee,
second control means (122) responsive to said payment detection means (132) for storing said advertisement in a storage device (125), and
retrieving means (122) responsive to said first control means (132) for retrieving an advertisement from said storage device (125),
wherein said first control means (132) is adapted to control said first printing means (139) to print said retrieved advertisement together with said check-out information on said receipt.

2. A system according to claim 1 wherein said cash register (131) and said terminal device (111) are each connected to a common server (121), and wherein
said terminal device (111) further includes:
- first display means (113),
- first data exchange means (112, 118) for sending a respective advertisement entered by means of said second input means (114, 115, 117) to said server (121) and for receiving from said server (121) a unique registration number for said respective advertisement, and
- second printing means (116) adapted to issue a registration card with information representing said registration number for said respective advertisement printed thereon,
said cash register (131) further includes:
- entering means (133) for entering the information read from said registration card,
- second display means (136) for displaying the amount of advertising fee,
- said payment detection means (132), and
- second data exchange means (132, 135) for data exchange with said server (121), said second data exchange means (132, 135) being responsive to said payment detection means (132) for sending the registration number read from said registration card to said server (121), and being adapted to receive the advertisement retrieved by said retrieving means (122), and
said server (121) includes:
third data exchange means (122, 123) for data exchange with said terminal device (111),
fourth data exchange means (122, 124) for data exchange with said cash register (131),
said storage device (125) being a non-volatile storage device,
said second control means (122), and
said retrieving means (122),
wherein said second control means (122) is responsive to said third data exchange means receiving a respective advertisement for assigning said unique registration number to the received advertisement, for returning the assigned registration number to said terminal device (111), and for temporarily saving said respective advertisement and the associated registration number in said storage device (125), and is responsive to said fourth data exchange means receiving said registration number from said cash register (131) for finally storing said respective advertisement.

3. A system according to claim 2 wherein said server (121) and said cash register (131) or said server (121) and said terminal device (111) constitute a single unit.

4. A system according to any one of claims 1 to 3, wherein said second input means (114, 115, 117) comprises image input means (115, 117) allowing said second customer to enter an image as said or part of said advertisement.

5. A system according to claim 4, wherein said image input means (117) comprises a disk drive allowing image information to be input as image file.

6. A system according to any one of claims 1 through 5, wherein said second input means (114, 115, 117) is adapted to allow said second customer to select the size in which said advertisement is to printed on said receipt, and wherein said second calculating means (112) is adapted to calculate said advertising fee in accordance with the selected size.

7. A system according to any one of claims 1 through 6, wherein said first printing means (139) is a color printer capable of printing said advertisement in two or more colors.

8. A system according to any one of the preceding claims, wherein
said first input means (133, 134, 138) is arranged to allow predefined personal information about said first customer to be entered;
said second input means (114, 115, 117) is adapted to allow said second customer to enter one or more predefined conditions that define a target group of customers to be addressed by said advertisement, said target group including all customers satisfying each of said one or more conditions and excluding all other customers,
said second control means (122) is adapted to store said advertisement together with the associated conditions, and
said retrieving means (122) is responsive to said personal information for retrieving from said storage device (125) an advertisement associated with conditions which are satisfied by said first customer.

9. A system according to Claim 6, wherein said one or more conditions and said personal information comprises one or more of the age group, the sex and the occupation.

10. A system according to any one of the preceding claims wherein each of said cash register (131), terminal device (111) and server (121) comprises a respective program-controlled microprocessor for controlling said cash register (131), terminal device (111) and server (121), respectively.

## Patentansprüche

1. Kassen-System mit:
einer Registrierkasse (131) aufweisend:
- erste Eingabemittel (133, 134, 138) zum Eingeben von Daten bezüglich eines oder mehrerer Produkte, die von einem ersten Kunden zum Kauf gewählt worden sind;
- ein erstes Rechenmittel (132), das auf diese Daten mit der Berechnung des für die Produkte vom ersten Kunden zu zahlenden Geldbetrags reagiert;
- ein erstes Druckmittel (139); und
- ein erstes Steuermittel (132) zum Steuern des ersten Druckmittels (139) für den Ausdruck einer Quittung für den ersten Kunden, wobei die Quittung Kasseninformation enthält, die sich auf den Erwerb der Produkte bezieht; und
einem Terminalgerät (111), das getrennt von der Registrierkasse (131) bereitgestellt ist und zweite Eingabemittel (114, 115, 117) aufweist,
**dadurch gekennzeichnet, dass**
die zweiten Eingabemittel (114, 115, 117) so angeordnet sind, dass ein zweiter Kunde eine vom Kassen-System auszudruckende Werbung eingeben kann, und das Kassen-System ferner aufweist:
ein zweites Rechenmittel (112) zum Berechnen einer für das Ausdrucken der Werbung zu bezahlenden Werbegebühr;
ein Zahlungsdetektormittel (132) zum Detektieren der Zahlung der Werbegebühr;
ein zweites Steuermittel (122), das auf das Zahlungsdetektormittel (132) damit reagiert, die Werbung in einem Speichergerät (125) zu speichern; und
ein Abrufmittel (122), das auf das erste Steuermittel (132) damit reagiert, eine Werbung aus dem Speichergerät (125) abzurufen,
wobei das erste Steuermittel (132) dazu eingerichtet ist, das erste Druckmittel (139) so zu steuern, dass es die abgerufene Werbung zusammen mit den Kasseninformationen auf der Quittung ausdruckt.

2. System nach Anspruch 1, bei dem die Registrierkasse (131) und das Terminalgerät (111) jeweils mit einem gemeinsamen Server (121) verbunden sind, und bei dem
das Terminalgerät (111) ferner enthält:
- ein erstes Anzeigemittel (113);
- ein erstes Datenaustauschmittel (112, 118) zum Senden einer jeweiligen Werbung, die über die zweiten Eingabemittel (114, 115, 117) in den Server (121) eingegeben wurde, und zum Empfangen einer eindeutigen Registrierungsnummer für die jeweilige Werbung von diesem Server (121); und
- ein zweites Druckmittel (116), das zur Ausgabe einer Registrierungskarte eingerichtet ist, auf der die Registrierungsnummer für die jeweilige Werbung darstellende Information aufgedruckt ist;
wobei die Registrierkasse (131) ferner enthält:
- ein Eingabemittel (133) zur Eingabe der von der Registrierungskarte ausgelesenen Informationen;
- ein zweites Anzeigemittel (136) zum Anzeige des Betrags der Werbegebühr;
- das Zahlungsdetektormittel (132); und
- ein zweites Datenaustauschmittel (132, 135) für den Datenaustausch mit dem Server (121), wobei das zweite Datenaustauschmittel (132, 135) auf das Zahlungsdetektormittel (132) damit reagiert, die von der Registrierungskarte ausgelesene Registrierungsnummer an den Server (121) zu senden, und dazu eingerichtet ist, die vom Abrufmittel (122) abgerufene Werbung zu empfangen; und
der Server (121) enthält:
ein drittes Datenaustauschmittel (122, 123) für den Datenaustausch mit dem Terminalgerät (111);
ein viertes Datenaustauschmittel (122, 124) für den Datenaustausch mit der Registrierkasse (131);
das Speichergerät (125), bei dem es sich um ein nicht flüchtiges Speichergerät handelt;
das zweite Steuermittel (122); und
das Abrufmittel (122);
wobei das zweite Steuermittel (122) auf das dritte Datenaustauschmittel, das die jeweilige Werbung empfängt, damit reagiert, der empfangenen Werbung die eindeutige Registrierungsnummer zuzuweisen, die zugewiesene Registrierungsnummer an das Terminalgerät (111) zurückzusenden, und die jeweilige Werbung und die zugewiesene Registrierungsnummer im Speichergerät (125) vorübergehend zu speichern, und auf das vierte Datenaustauschmittel, das die Registrierungsnummer von der Registrierkasse (131) empfängt, damit regiert, die jeweilige Werbung endgültig zu speichern.

3. System nach Anspruch 2, bei dem der Server (121) und die Registrierkasse (131) oder der Server (121) und das Terminalgerät (111) eine einzige Einheit bilden.

4. System nach einem der Ansprüche 1 bis 3, bei dem die zweiten Eingabemittel (114, 115, 117) ein Bildeingabemittel (115, 117) aufweisen, das es dem zweiten Kunden ermöglicht, ein Bild als die Werbung oder einen Teil der Werbung einzugeben.

5. System nach Anspruch 4, bei dem das Bildeingabemittel (115, 117) ein Plattenlaufwerk aufweist, in das Bildinformationen als Bilddatei eingegeben werden können.

6. System nach einem der Ansprüche 1 bis 5, bei dem die zweiten Eingabemittel (114, 115, 117) dazu eingerichtet sind, dem zweiten Kunden zu ermöglichen, die Größe, in der die Werbung auf der Quittung auszudrucken ist, zu wählen, und bei dem das zweite Rechenmittel (112) zum Berechnen der Werbegebühr gemäß der gewählten Größe eingerichtet ist.

7. System nach einem der Ansprüche 1 bis 6, bei dem das erste Druckmittel (139) ein Farbdrucker ist, der die Werbung in zwei oder mehr Farben ausdrucken kann.

8. System nach einem der vorigen Ansprüche, bei dem
die ersten Eingabemittel (133, 134, 138) so ausgebildet sind, dass vordefinierte persönliche Informationen über den ersten Kunden eingegeben werden können;
die zweiten Eingabemittel (114, 115, 117) so eingerichtet sind, dass der zweite Kunde eine oder mehrere vordefinierte Bedingungen eingeben kann, die eine von der Werbung anzusprechende Zielgruppe von Kunden definiert, wobei die Zielgruppe alle Kunden einschließt, die jede der einen oder mehreren Bedingungen erfüllen, und alle anderen Kunden ausschließt;
das zweite Steuermittel dazu eingerichtet ist, die Werbung zusammen mit den zugehörigen Bedingungen zu speichern; und
das Abrufmittel (122) auf die persönlichen Informationen damit reagiert, aus dem Speichergerät (125) eine Werbung abzurufen, die zu den Bedingungen gehört, die der erste Kunde erfüllt.

9. System nach Anspruch 6, bei dem die eine oder die mehreren Bedingungen und die persönliche Information eines oder mehreres von Altersgruppe, Geschlecht und Beruf aufweisen.

10. System nach einem der vorigen Ansprüche, bei dem die Registrierkasse (131), das Terminalgerät (111) und der Server (121) jeweils einen programmgesteuerten Mikroprozessor zum Steuern der Registrierkasse (131), des Terminalgeräts (111) bzw. des Servers (121) aufweisen.

## Revendications

1. Système de point de vente ayant
une caisse (131) enregistreuse comprenant
- un premier moyen (133, 134, 138) d'entrée, pour entrer des données concernant un ou plusieurs produits sélectionnés à l'achat par un premier client,
- un premier moyen (132) de calcul, sensible aux dites données, pour calculer le montant à payer pour ces produits par le premier client,
- un premier moyen (139) d'impression, et
- un premier moyen (132) de commande du premier moyen (139) d'impression, pour imprimer un reçu pour le premier client, le reçu comprenant une information de vérification concernant l'achat des produits; et
- un dispositif (111) à terminal prévu d'une manière distincte de la caisse (131) enregistreuse et comportant un deuxième moyen (114, 115, 117) d'entrée,
**caractérisé en ce que**
le deuxième moyen (114, 115, 117) d'entrée est conçu pour permettre à un deuxième client d'entrer une réclame à imprimer par le système de point de vente et le système de point de vente comprend en outre:
une deuxième moyen (112) de calcul d'une taxe de réclame à payer pour l'impression de la réclame,
un moyen (132) de détection de paiement pour détecter le paiement de la page de réclame,
un deuxième moyen (122) de commande, sensible au moyen (132) de détection du paiement, pour mémoriser la réclame dans un dispositif (125) de mémorisation et,
un moyen (122) sensible au premier moyen (132) de contrôle, pour retrouver une réclame dans le dispositif (125) de mémorisation,
dans lequel le premier moyen (132) de commande est conçu pour commander le premier moyen (139) d'impression afin d'imprimer la réclame retrouvée ensemble avec l'information de vérification sur le reçu.

2. Système suivant la revendication 1, dans lequel la caisse (131) enregistreuse et ledispositif (111) à terminal sont reliés chacun à un serveur (121) commun et dans lequel
un dispositif (111) à terminal comprend en outre:
- un premier moyen (113) d'affichage,
- un premier moyen (112, 118) d'échange de données pour envoyer une réclame respective entrée au moyen du deuxième moyen (114, 115, 117) d'entrée au serveur (121) et pour recevoir du serveur (121) un numéro unique d'enregistrement de la réclame respective et,
- un deuxième moyen (116) d'impression connue pour émettre une carte d'enregistrement ayant une information représentant le numéro d'enregistrement pour la réclame respective qui y est imprimée,
la caisse (131) enregistreuse comprenant en outre:
- un moyen (133) d'entrée de l'information lue sur la carte d'enregistrement,
- un deuxième moyen (136) d'affichage pour afficher la valeur de la taxe de réclame,
- le moyen (132) de détection du paiement; et
- un deuxième moyen (132, 135) d'échange de données, pour échanger des données avec le serveur, (121)
- le deuxième moyen (132, 135) d'échange de données étant sensible au moyen de détection (132) pour envoyer le numéro d'enregistrement lu sur la carte d'enregistrement au serveur (121), et étant conçu pour recevoir la réclame retrouvée par le moyen (122) permettant de la retrouver, et
le serveur (121) comprend:
un troisième moyen (122, 123) d'échange de données, pour échanger des données avec le dispositif (111) à terminal,
un quatrième moyen (122, 124) d'échange de données, pour échanger des données avec la caisse (131) enregistreuse,
le dispositif (125) de mémorisation étant un dispositif de mémoire vive,
le deuxième moyen (122) de commande, et
les moyens (122) pour retrouver,
dans lequel le deuxième moyen (122) de commande est sensible au troisième moyen d'échange de données, recevant une réclame respective, pour affecter le numéro unique d'enregistrement à la réclame reçue pour retourner le nombre d'enregistrement affecté au dispositif (111) à terminal et pour sauvegarder temporairement la réclame respective et le numéro d'enregistrement associé au dispositif (125) de mémorisation et, en réponse au quatrième moyen d'échange de données, pour recevoir le numéro d'enregistrement de la caisse (131) enregistreuse afin de mémoriser finalement la réclame respective.

3. Système suivant la revendication 2, dans lequel le serveur (121) et la caisse (131) enregistreuse ou le serveur (121) et un dispositif (111) à terminal constitue une seule unité.

4. Système suivant l'une des revendications 1 à 3, dans lequel le deuxième moyen (114,115, 117) d'entrée comprend un moyen (115, 117) d'entrée d'image, permettant au deuxième client d'entrer une image comme la réclame ou en tant que partie de la réclame.

5. Système suivant la revendication 4, dans lequel le moyen (117) d'entrée d'image comprend un dispositif de lecture et d'écriture de disque, permettant d'entrer une information d'image en tant que dossier d'image.

6. Suivant l'une des quelconques revendications 1 à 5, dans lequel le deuxième moyen (114, 115, 117) d'entrée est conçu pour permettre au deuxième client de choisir la dimension suivant laquelle la réclame doit être imprimée sur le reçu et
dans lequel le deuxième moyen (112) de calcul est conçu pour calculer la taxe de réclame en fonction de la dimension choisie.

7. Système suivant l'une quelconque des revendications 1 à 6, dans lequel le premier moyen (139) d'impression est une imprimante en couleur apte à imprimer la réclame en deux couleurs ou en plusieurs couleurs.

8. Système suivant l'une quelconque des revendications précédentes, dans lequel
le premier moyen (133, 134, 138) d'entrée est conçu pour permettre d'entrer une information personnelle définie à l'avance concernant le premier client;
le deuxième moyen (114, 115, 117) d'entrée est conçu pour permettre au deuxième client d'entrer une ou plusieurs conditions définies à l'avance qui définissent un groupe cible de clients auquel la réclame doit s'adresser, le groupe cible comprenant tous les clients qui satisfont à chacune de la une ou plusieurs conditions et excluant tous les autres clients.
Le deuxième moyen (112) de commande est conçu pour mémoriser la réclame ensemble avec les conditions associées,
Le moyen (122) pour retrouver est sensible à l'information personnelle, pour retrouver dans le dispositif (125) de mémorisation une réclame associée à des conditions qui sont satisfaites par le premier client.

9. Système suivant la revendication 6, dans lequel la une ou les plusieurs conditions et l'information personnelle comprennent un ou plusieurs groupes d'âges, le sexe et la profession.

10. Système suivant l'une quelconque des revendications précédentes, dans lequel chacun de la caisse (131) enregistreuse du dispositif (111) à terminal et du serveur (121) comprend un microprocesseur respectif commandé par programme pour commander la caisse (131) enregistreuse, le dispositif (111) à terminal et le serveur (121) respectivement.
